# EUROPEAN PATENT APPLICATION

(11) **EP 1 259 030 A2**
(43) Date of publication of application: **20.11.2002**
(21) Application number: 02394045.5
(22) Date of filing: 26.04.2002
(51) Int. Cl.: H04L 12/24

(54) **System and method for predicting network performance**

(30) Priority: 18.05.2001 US 861273
(71) Applicant: Gateway, Inc., North Sioux City, South Dakota 57049 (US)
(72) Inventor: Anderson,Glen J., Sioux City, IA 51104 (US)
(74) Representative: McCarthy, Denis Alexis

(57) **Abstract**

The present invention is directed to a system and method for predicting network performance. A method of predicting network utilization of a network system may include monitoring actions occurring on a plurality of nodes communicatively coupled over a network. Actions occurring on the plurality of nodes are identified which indicate a likelihood of future network utilization and performance of the network based upon the determined indication of future network utilization based upon the monitored actions is predicted.

## Description

### FIELD OF THE INVENTION

The present invention generally relates to the field of network data transfer, and particularly to predicting network performance, alteration of content based on predicted network performance and network traffic prediction based upon local node activity.

### BACKGROUND OF THE INVENTION

Electronic information transfer is one of the driving forces in technological advancement. With the ability to transfer information over great distances almost instantaneously, the flow of information, data and ideas is occurring with greater rapidity than previously imagined. For example, users may access the Internet to obtain information from web sites, send and receive electronic messages, engage in e-commerce and the like over both wireless and "hard-wired" network connections. The great utility of this resource has made its incorporation into most aspects of everyday life a necessity.

Even with the great advances in electronic data transfer, users may still encounter instances in which the network access is slowed or otherwise limited. For example, a user may access a network utilizing a wireless device which may limit the ability to transfer information, multiple users may share a limited amount of network bandwidth, thereby decreasing the available bandwidth to each user, and the like. Previous methods utilized to address network performance were limited to detecting current available network bandwidth, and made little or no provision for arriving at a network performance determination which corresponded to when the user actually needed to use the network. Therefore, when network utilization was actually needed, performance of the network may vary greatly than the previously determined performance, thereby resulting in inconsistencies, unnecessary operations, and the like.

### SUMMARY OF THE INVENTION

Accordingly, the present invention is directed to a system and method for predicting network performance. Network traffic prediction may be based upon local node activity. Additionally, alteration of content may be based on predicted network performance. In a first aspect of the present invention, a method of predicting network utilization of a network node includes monitoring utilization of a node, the node communicatively coupled to a network. An action, occurring on the node, indicating future network utilization is identified and performance of the network based upon the indication of future network utilization based upon the identified action is predicted.

In a second aspect of the present invention, a method of predicting network utilization of a network system, includes monitoring actions occurring on a plurality of nodes communicatively coupled over a network. Actions occurring on the plurality of nodes are identified, the actions indicating future network utilization. Performance of the network is predicted based upon the determined indication of future network utilization.

In a third aspect of the present invention, a method of predicting network utilization includes receiving a request for utilization of a network by an information handling system, the information handling system being communicatively coupled to the network. A predicted time of utilization of the network by the information handling system is compared with a database suitable for describing network utilization. Network performance is predicted based on the compared time of utilization of the network by the information handling system with the database.

In a fourth aspect of the present invention, a method of predicting network performance of a network system includes monitoring actions occurring on a plurality of nodes communicatively coupled over a network. A time of utilization of the network is determined based upon the monitored actions occurring on the plurality of nodes. The predicted time of utilization of the network by at least one node of the plurality of nodes is compared with a database suitable for describing network utilization. Network performance is predicted based on the compared predicted time of utilization of the network by the at least one node with the database suitable for describing network utilization.

In a fifth aspect of the present invention, a system suitable for predicting network utilization includes a plurality of nodes communicatively coupled over a network and a first node communicatively coupled to the plurality of nodes. Actions occurring on the plurality of nodes are monitored and at least one action occurring on the plurality of nodes is identified as indicating future network utilization. A prediction of network performance is made based on the monitored identified action indicating future network utilization so that network prediction is utilized to configure network utilization by the first node. In exemplary embodiment either the first node and/or the plurality of nodes may monitor without departing from the scope and spirit of the present invention.

In a sixth aspect of the present invention, a system for predicting network utilization includes means for monitoring utilization of a node, the node communicatively coupled to a network. Means for identifying an action occurring on the node indicating future network utilization is coupled to the monitoring means.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:
FIG. 1 is an illustration of an embodiment of the present invention wherein a network system includes a plurality of nodes communicatively coupled over a network to transfer data;
FIG. 2 is an illustration of an embodiment of the present invention wherein a plurality of nodes are connected over a local network to a server acting as a gateway to a wide area network;
FIG. 3 is a flow diagram depicting an exemplary method of the present invention wherein an action identified as indicating a likelihood of future network utilization is utilized to predict performance of a network;
FIG. 4 is a flow diagram illustrating an exemplary method of the present invention wherein network utilization may be configured based upon predicted network performance arrived at through the monitored utilization of the nodes;
FIG. 5 is a flow diagram describing an exemplary method of the present invention wherein a predicted time of utilization of a node is compared with a database suitable for describing network utilization to predict network performance of the predicted time of utilization by the node;
FIG. 6 is a flow diagram of an exemplary method of the present invention wherein network data is configured based upon compared predicted time of utilization of a network by an information handling system with a database arranged as a historesis of network utilization;
FIG. 7 is a flow diagram illustrating an exemplary method of the present invention wherein monitored utilization of a plurality of nodes is utilized to indicate a likelihood of future network utilization based on identified actions in conjunction with a comparison of a predicted time of utilization of the network by an information handling system with a database to predict network performance; and
FIG. 8 is a flow diagram depicting an embodiment of the present invention wherein an electronic message is configured based on network performance as predicted by monitored node actions and comparison with a database suitable for describing network utilization.

### DETAILED DESCRIPTION OF THE INVENTION

Reference will now be made in detail to the embodiments of the invention, examples of which are illustrated in the accompanying drawings.

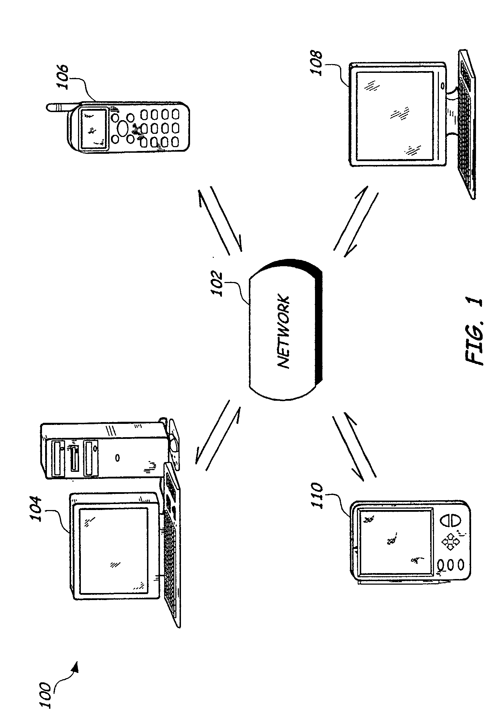

Referring generally now to FIGS. 1 through 8, embodiments of the present invention are shown. Performance of networks may vary greatly depending on current usage, available connections, available bandwidth, device failure, content provider speed, and the like. Because of this, it may be desirable to configure data transferred over a network depending on network performance. Previously, it was difficult to determine current available bandwidth of a network connection and even more difficult to determine future available bandwidth. Therefore, by accurately predicting network performance, greater and more efficient utilization of network resources may be achieved. Further, network data may be configured based on the predicted network performance, thereby enabling even greater utility.

Referring now to FIG. 1, an embodiment of the present invention is shown wherein a network system includes a plurality of nodes communicatively coupled over a network to transfer data. A network system 100 may include a plurality of nodes, such as devices connected to a network 102 capable of communicating with other network devices. For example, a network system 100 may include a traditional desktop computer system 104, a wireless device, such as a wireless phone 106, an internet appliance 108, personal digital assistant 110 and the like as contemplated by a person of ordinary skill in the art. The nodes are communicatively coupled over a network 102. However, the network 102 may have a limited bandwidth, therefore actions taken by one node may affect other nodes. For instances, a user of a computer 104 may wish to transfer a large file, such as a large image, video, and the like. The transfer of the file across the network 102 may limit the available network bandwidth to a user of a wireless phone 106 that wishes to wirelessly access the Internet over the network 102. In this way, actions taken by one node may affect network performance, such as available bandwidth, of a second node.

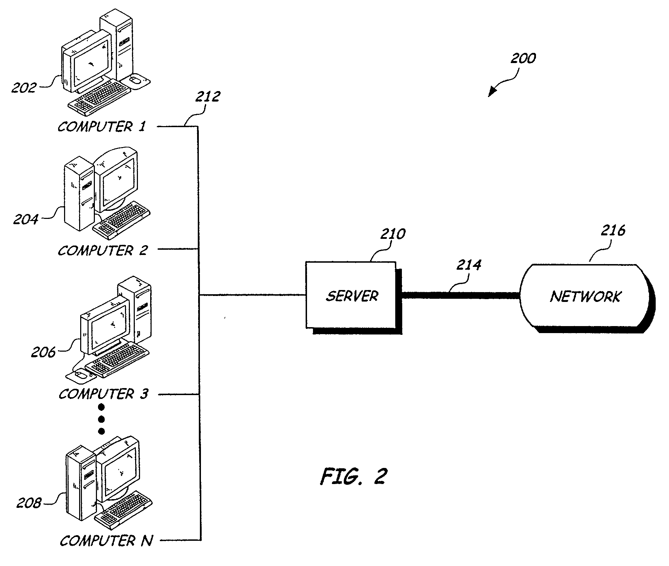

Referring now to FIG. 2, an embodiment of the present invention is shown wherein a plurality of nodes are connected over a local network to a server acting as a gateway to a wide area network. A network system 200 may include a plurality of nodes 202, 204, 206 and 208, in this instance configured as information handling systems and the like, communicatively coupled to a server 210 over a local area network 212. The server 210 may act as a gateway for connection 214 to a wide area network 216, such as the Internet. The server 210 may be allotted a given amount of bandwidth over the connection 214 to the network 216 and must therefore divide this bandwidth amongst the plurality of nodes 202, 204, 206 and 208 accessible over a local area network 212.

For instance, actions taken on one node 202 may affect both the local area network 212 and available bandwidth of the server 210 over the connection 214 to the wide area network 216. Thus, a user of a node 204 may wish to utilize the network to send a large amount of data, but due to the other user's actions on the other node 202, may experience decreased network performance. Therefore, it may be desirable to configure the data to account for the network performance as caused by the first node as affecting the second node.

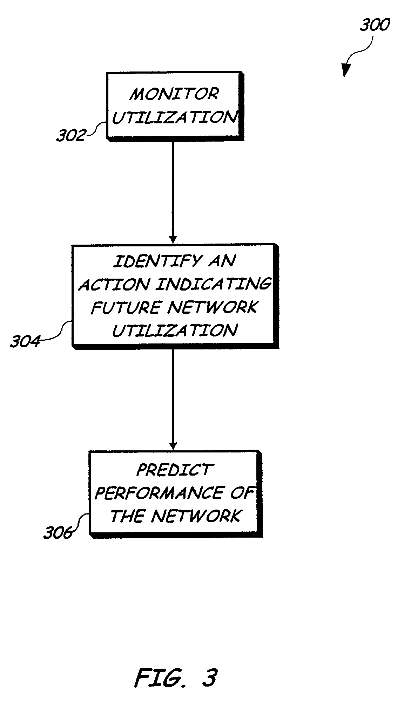

Referring now to FIG. 3, an exemplary method 300 of the present invention is shown wherein an action identified as indicating a likelihood of future network utilization is utilized to predict performance of a network. Utilization is monitored 302. For example, utilization of a single node or a plurality of nodes may be monitored, as shown in FIGS. 1 & 2, and the like as contemplated by a person of ordinary skill in the art. An action is identified indicating future network utilization by a node 304. The performance of the network is then predicted 306 based on the identified actions. In this way, utilization and interaction with nodes in a network system may be utilized to predict future network performance based on the predicted utilization of the network by the nodes. Network utilization may include a variety of aspects of network use, such as actual transmittal of data, storage requirements on network drives, and other resources related to network use as contemplated by a person of ordinary skill in the art.

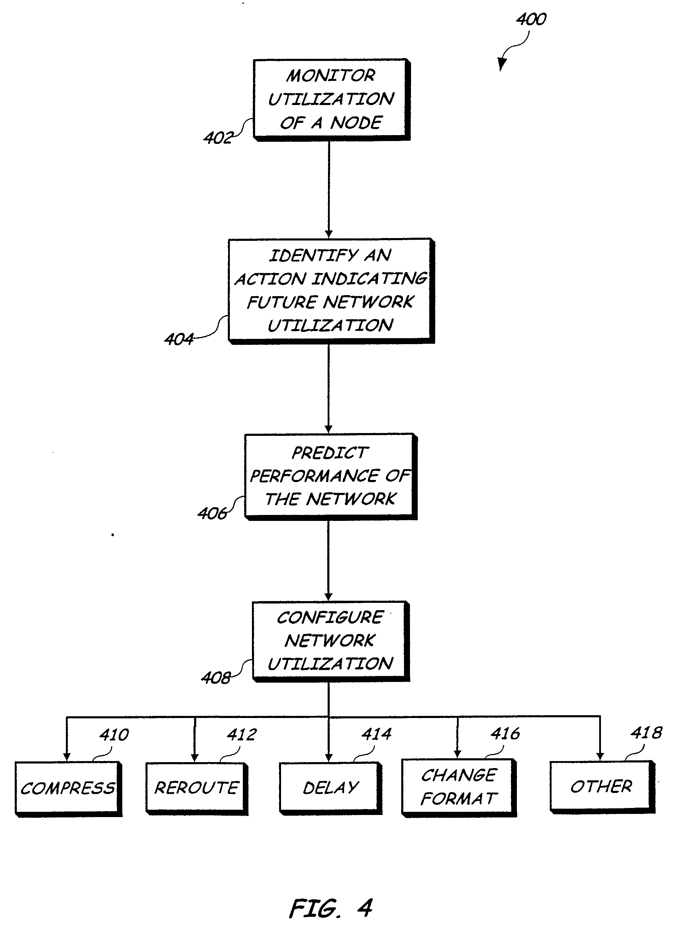

For example, as shown in the exemplary method 400 depicted in FIG. 4, network utilization may be configured based upon predicted network performance arrived at through the monitored utilization of nodes. Utilization of a node is monitored 402 and an action indicating future network utilization is identified 404. For example, an action may be identified through previously monitored utilization and actions that indicate a user is about to utilize a network, such as interaction with a specific program; action and/or command in a program; type of program, such as email and initiation of a browser; and the like.

An action identification database may be utilized for identifying the type of action, the action identification database arrived at through monitored previous interaction, a listing of actions, commands, and interaction, and the like as contemplated by a person of ordinary skill in the art. Additionally, newly added programs, hardware, software and the like may be utilized to predict network utilization, such as a particular type of program that is network intensive, hardware that requires frequent and/or infrequent network access, and the like. For instance, during monitored utilization, it may be found that when a user utilizes an image manipulation program, within a given time period of the user implementing the save function, the image is transferred over the network by the user. Therefore, this action may be utilized in subsequent instances to predict network utilization by the node and therefore network performance as a whole.

In another example, an action, such as implementing the compose function in an electronic messaging program, may indicate that within *X* minutes a message will be sent, and therefore, the use of the function may be utilized to predict network utilization by the node, and therefore performance of the network as a whole. Additionally, monitoring a plurality of nodes over time may allow an estimation of probabilities of network utilization by the plurality of nodes. For example, if a network has 100,000 nodes, and 5,000 of the nodes are editing video, judging from past experience in a historical database, 10% of the nodes will be utilized to send video. Thus, the identification of video editing is used to indicate future network utilization by the nodes.

Based on the identified action of the nodes, performance of the network may be predicted 406. The predicted network performance may then be utilized to configure network utilization 408. For example, a user confronted with decreased predicted network performance, may have the files compressed 410, rerouted 412, delay sending 414, change format to one more practical to decreased network utilization, such as text without including images and/or sound, or other 418 configuration as contemplated by a person of ordinary skill in the art. In this way, a user may experience increased efficiency in utilization of a network based on predicted network performance. Further, the efficiency of the network system as a whole may be increased due to the ability to reroute and configure data transfer based on predicted performance arrived at through monitored utilization of the nodes.

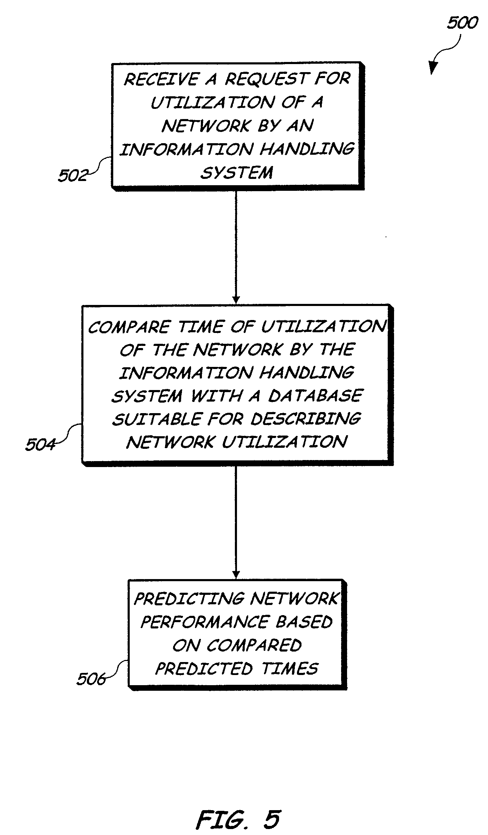

Referring now to FIG. 5, an exemplary method 500 of the present invention is shown wherein a predicted time of utilization of a node is compared with a database suitable for describing network utilization to predict network performance of the predicted time of utilization by the node. A request is received for utilization of a network by an information handling system 502. A predicted time of utilization of the network by the information handling system is compared with a database suitable for describing network utilization 504. For example, a database may contain a temporal listing of network utilization by nodes, so as to be able to describe previously encountered utilization at corresponding times. Therefore, a predicted time of utilization of the network by a node may be compared to times listed in the database to describe previous utilization. Thus, network performance may be predicted based on the compared predicted times 506. Such a database may include a historical database and be indexed based on day, time of day, week, month, year, weighted by available bandwidth at those given times, and the like as contemplated by a person of ordinary skill in the art.

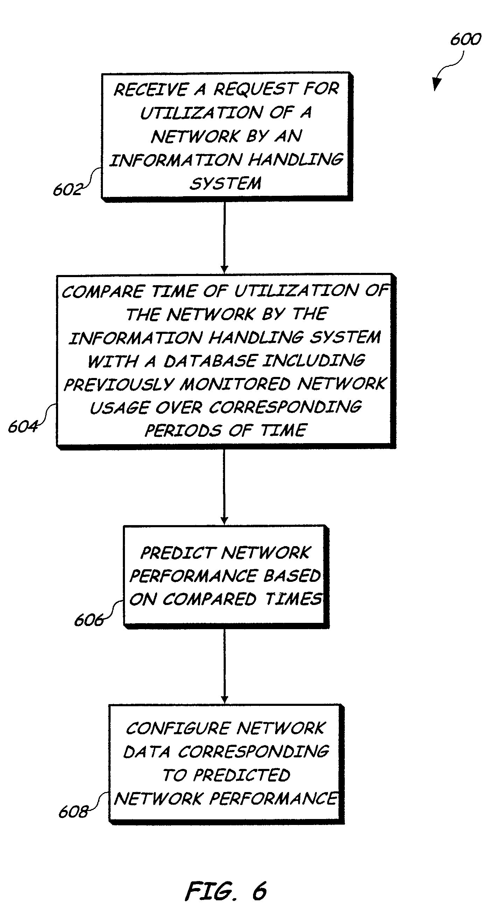

For instance, in the exemplary method 600 shown in FIG. 6, network data is configured based upon compared predicted time of utilization of a network by an information handling system with a database arranged in a historical manner describing network utilization. A request is received for utilization of a network by an information handling system 602. The predicted time of utilization of the network by the information handling system is compared with a database including previously monitored network usage over corresponding periods of time 604. Network performance is predicted based on the compared times 606. The network data may then be configured to correspond to predicted network performance 608. For example, in low network performance situations, data may be compressed, saved in more efficient formats, and the like without departing from the spirit and scope of the present invention. Further, it may be desirable to perform such a conversion automatically when confronted with a low network performance condition, such as network performance below a described threshold, network performance indicating a trend, and the like. It may also be desirable to display a confirmation window to a user before performing such a conversion. In this way, efficient utilization of a network may be achieved in an unobtrusive manner.

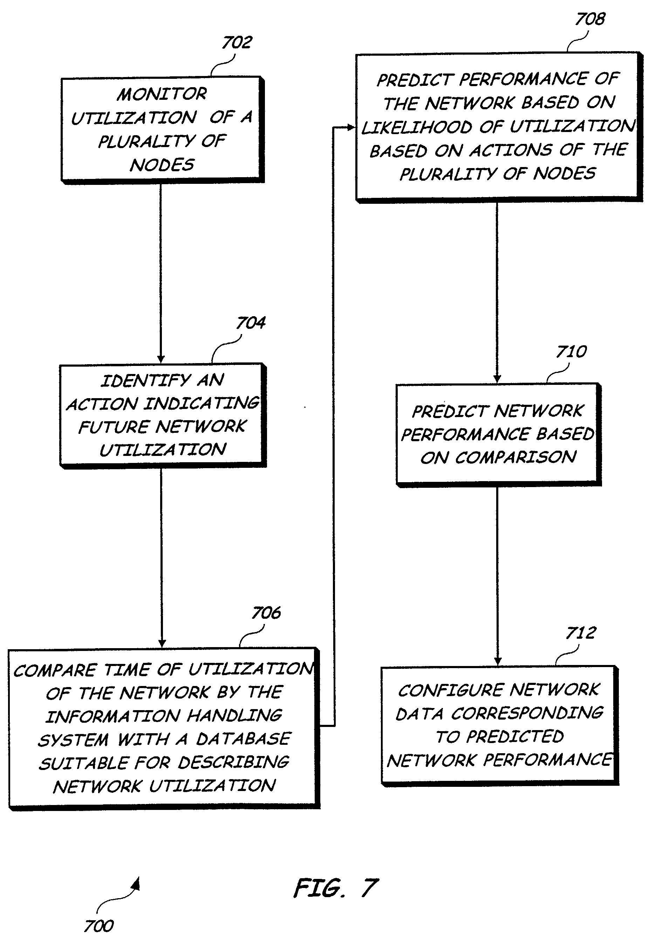

Referring now to FIG. 7, an exemplary method 700 of the present invention is shown wherein monitored utilization of a plurality of nodes is utilized to indicate a likelihood of future network utilization based on identified actions in conjunction with a comparison of a predicted time of utilization of the network by an information handling system with a database to predict network performance. Utilization of a plurality of nodes is monitored 702 and actions indicating network utilization are identified on the nodes 704. A predicted time of utilization of the network by an information handling system is compared with a database suitable for described network utilization 706. The database may include downloaded information of contemplated network utilization and/or be based on previously monitored network utilization and the like as contemplated by a person of ordinary skill in the art.

Performance of the network is predicted based on likelihood of utilization based on monitored actions on the plurality of nodes 708. Additionally, network performance is also predicted based the database comparison 710. The network data of the information handling system may be configured 712 corresponding to predicted network performance of both the identified actions and compared predicted times. In this way, network utilization for the information handling system may be efficiently provided based both on actions by other nodes as well as previously stored utilization data.

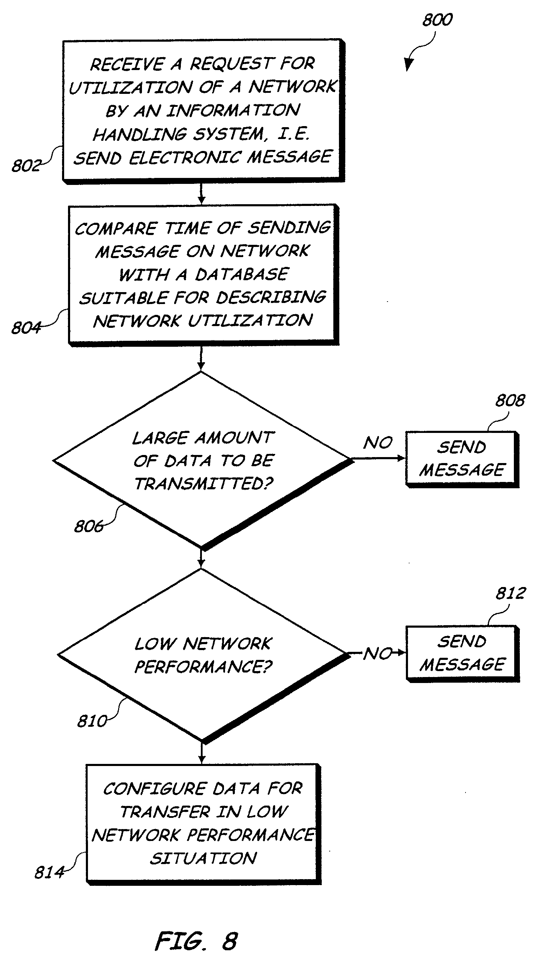

Referring now to FIG. 8, an exemplary method 800 of the present invention is shown wherein an electronic message is configured based on network performance as predicted by monitored node actions and comparison with a database suitable for describing network utilization. A request is received for network utilization by an information handling system, in this case, to send an electronic message 802. A predicted time of sending the electronic message on a network is compared with a database suitable for describing network utilization 804. Comparison may include predicting a time of the actual network utilization is to occur with a corresponding time in the database.

A determination is then made of the amount of data to be transmitted 806, so that if a minimal amount of data is to be transmitted, such as an amount below a user-defined threshold level, the data may be sent 808. However, if there is a large amount of data 806, such as an amount above a threshold, such as 10 megabytes, a determination is then made as to the level of network performance. If there is a high level of network performance, the message may be sent without being reconfigured 812. However if there is limited network performance 810, such as performance below a threshold, data may be configured for transfer in a low network performance situation 814. For example, attachments may be compressed, image formats changed to more space efficient formats, compression techniques utilized, and the like without departing from the spirit and scope of the present invention.

For example, during monitored utilization of a plurality of nodes, it may be determined that when an information handling system is initiated, such as powered up, exiting sleep mode, and the like, that within *N* minutes the user accesses email. Therefore, the action of initiating the information handling system may be utilized to predict future network activity, and therefore performance. Additionally, the time of day may be utilized, such as during normal network utilization, that *N* percentage of nodes access the Internet in the morning to check email and access news websites, and thus, future network utilization may be predicted.

Further, predicting performance of the network may be based both on the amount of network data for transfer in conjunction with expected network utilization. For example, the predicted bandwidth of a network may be below a threshold, such as *X* amount of bandwidth, such as 10 kilobytes per second, and the size of the document may be above a data amount threshold *Y*, such as 5 megabytes. Thus, the amount of time *Z* needed to transfer the document may be computed, and if *Z* is within a certain user-desired range, such as 5 minutes or lower, the network transfer may be initiated without reconfiguration of the data. However, if *Z* is above the threshold, then configuration of the data may be desirable. Further, it should be apparent to a person of ordinary skill in the art that a variety of thresholds as well as the number of thresholds may be utilized without departing from the spirit and scope of the present invention. For instance, multiple thresholds may be utilized in which the compression technique utilized increases in the amount of compression achieved based on the available network performance, and the like uses as disclosed herein.

Although the invention has been described with a certain degree of particularity, it should be recognized that elements thereof may be altered by persons skilled in the art without departing from the spirit and scope of the invention. One of the embodiments of the invention can be implemented as sets of instructions resident in the memory of one or more information handling systems. The set of instruction may be stored on a node and/or server, such as the arrangements shown in FIGS. 1 and 2. Until required by a node, the set of instructions may be stored in another readable memory device, for example in a hard disk drive or in a removable memory such as an optical disc for utilization in a CD-ROM drive, a floppy disk for utilization in a floppy disk drive, a floppy/optical disc for utilization in a floppy/optical drive, or a personal computer memory card for utilization in a personal computer card slot. Further, the set of instructions can be stored in the memory of an information handling system and transmitted over a local area network or a wide area network, such as the Internet, when desired by the user. Additionally, the instructions may be transmitted over a network in the form of an applet that is interpreted or compiled after transmission to the computer system rather than prior to transmission. One skilled in the art would appreciate that the physical storage of the sets of instructions or applets physically changes the medium upon which it is stored electrically, magnetically, chemically, physically, optically or holographically so that the medium carries computer readable information.

In exemplary embodiments, the methods disclosed may be implemented as sets of instructions or software readable by a device. Further, it is understood that the specific order or hierarchy of steps in the methods disclosed are examples of exemplary approaches. Based upon design preferences, it is understood that the specific order or hierarchy of steps in the method can be rearranged while remaining within the scope of the present invention. The accompanying method claims present elements of the various steps in a sample order, and are not meant to be limited to the specific order or hierarchy presented.

It is believed that the system and method for predicting network performance of the present invention and many of its attendant advantages will be understood by the forgoing description. It is also believed that it will be apparent that various changes may be made in the form, construction and arrangement of the components thereof without departing from the scope and spirit of the invention or without sacrificing all of its material advantages. The form herein before described being merely an explanatory embodiment thereof. It is the intention of the following claims to encompass and include such changes.

## Claims

1. A method of predicting network utilization of a network node, comprising:
monitoring utilization of a node, the node communicatively coupled to a network;
identifying an action occurring on the node indicating future network utilization; and
predicting performance of the network based upon the indication of future network utilization based upon the identified action.

2. The method as described in claim 1, further comprising comparing a time of the network utilization with a database suitable for describing network utilization;
optionally, wherein the database is created from past monitored network usage over corresponding periods of time;
optionally, wherein network performance is predicted based on the time of utilization of the network by the node with the database suitable for describing network utilization.

3. The method as described in claim 1, further comprising:
determining a time of utilization of the network based upon the monitored actions occurring on a plurality of nodes;
comparing the predicted time of utilization of the network by at least one node of the plurality of nodes with a database suitable for describing network utilization; and
predicting network performance based on the compared time of utilization of the network by the at least one node with the database suitable for describing network utilization.

4. The method as described in claim 1, further comprising configuring network usage based upon the network utilization of the node;
optionally, wherein configuring includes compressing data for transmittal across the network;
optionally, wherein the action is local to the node without requiring network access;
and optionally, wherein predicting includes determining an estimated amount of time of network utilization.

5. A method of predicting network utilization, comprising:
receiving a request for utilization of a network by an information handling system, the information handling system communicatively coupled to the network;
comparing a time of utilization of the network by the information handling system with a database suitable for describing network utilization; and
predicting network performance based on the compared time of utilization of the network by the information handling system with the database suitable for describing network utilization.

6. The method as described in claim 5, wherein the database is created from past monitored network usage over corresponding periods of time;
optionally, further comprising:
identifying an action occurring on the information handling system indicating future network utilization; and
predicting performance of the network based upon the indication of future network utilization based upon the identified action;
optionally, further comprising configuring network usage based upon the predicted network utilization of the information handling system; and
optionally, wherein configuring includes compressing data for transmittal across the network.

7. A method of predicting network performance of a network system, comprising:
monitoring actions occurring on a plurality of nodes communicatively coupled over a network;
determining a time of utilization of the network based upon the monitored actions occurring on the plurality of nodes;
comparing the time of utilization of the network by at least one node of the plurality of nodes with a database suitable for describing network utilization; and
predicting network performance based on the compared time of utilization of the network by the at least one node with the database suitable for describing network utilization.

8. The method as described in claim 7, wherein the database is created from past monitored network usage over corresponding periods of time;
optionally, wherein network performance is predicted based on time of day of utilization of the network by at least one node with the database suitable for describing network utilization;
optionally, further comprising:
identifying an action occurring on at least one node indicating future network utilization; and
predicting performance of the network based upon the indication of future network utilization based upon the identified action;
optionally, further comprising configuring network usage based upon the network utilization of at least one node; and
optionally, wherein configuring includes compressing data for transmittal across the network.

9. The method as described in claim 7, wherein the action is local to the nodes without requiring network access; and
optionally, wherein predicting includes determining an estimated amount of time of network utilization.

10. A system suitable for predicting network utilization, comprising:
a plurality of nodes communicatively coupled over a network, wherein actions occurring on the plurality of nodes is monitored by a node of at least one node of the plurality of nodes and at least one action occurring on the at least one node is identified as indicating future network utilization; and
a first node communicatively coupled to the plurality of nodes, wherein the first node requests utilization of the network, a prediction of network performance is made based on the monitored identified action indicating future network utilization so that the network prediction is utilized to configure network utilization by the first node.

11. The system as described in claim 10, wherein the first node further compares a time of network utilization with a database suitable for describing network utilization;
optionally, wherein the database is created from past monitored network usage over corresponding periods of time;
optionally, wherein network performance is predicted based on the time of utilization of the network by the information handling system with the database suitable for describing network utilization;
optionally, wherein the first node determines a time of utilization of the network based upon the monitored actions occurring on the first node and compares the time of utilization of the network by the first node with a database suitable for describing network utilization and predicts network performance based on the compared time of utilization of the network by the at least one node with the database suitable for describing network utilization; and
optionally, wherein configuring includes compressing data for transmittal across the network.

12. The system as described in claim 10, wherein the action is local to the plurality of nodes without requiring network access; and
optionally, wherein predicting includes determining an estimated amount of time of network utilization.

13. A system for predicting network utilization, comprising:
means for monitoring utilization of a node, the node communicatively coupled to a network;
means for identifying an action occurring on the node indicating future network utilization, the identifying means communicatively coupled to the monitoring means; and
means for predicting performance coupled to the identifying means, the predicting means suitable for predicting performance of the network based upon the indication of future network utilization based upon the identified action from the identification means.

14. The system as described in claim 13, further comprising means for comparing a time of network utilization with a database suitable for describing network utilization;
optionally, wherein the database is created from past monitored network usage over corresponding periods of time; and
optionally, wherein network performance is predicted based on the time of utilization of the network by the node with the database suitable for describing network utilization.

15. The system as described in claim 13, further comprising:
means for determining a time of utilization of the network based upon the monitored actions occurring on a plurality of nodes;
means for comparing the time of utilization of the network by at least one node of the plurality of nodes with a database suitable for describing network utilization; and
means for predicting network performance based on the compared time of utilization of the network by the at least one node with the database suitable for describing network utilization.
optionally, further comprising configuring network usage based upon the network utilization of the node;
optionally, wherein configuring includes compressing data for transmittal across the network;
optionally, wherein the action is local to the node without requiring network access; and
optionally, wherein predicting includes determining an estimated amount of time of network utilization.
